# EUROPÄISCHE PATENTSCHRIFT

(11) **EP 3 670 365 B1**
(45) Veröffentlichungstag und Bekanntmachung des Hinweises auf die Patenterteilung: **01.06.2022**
(21) Anmeldenummer: 19205055.7
(22) Anmeldetag: 24.10.2019
(51) Int. Cl.: B65B 7/16, B65B 7/28, B65B 31/02, B65B 61/06

(54) **SIEGELN VON KARTONZUSCHNITTEN MITTELS AUFLAGE AUF TRANSPORTBAND**
SEALING OF CARDBOARD BLANKS USING A CONVEYOR BELT
SCELLEMENT DES DÉCOUPES DE CARTON PAR APPUI SUR LA BANDE TRANSPORTEUSE

(30) Priorität: 21.12.2018 DE 102018222836
(43) Veröffentlichungstag der Anmeldung: 24.06.2020
(73) Patentinhaber: MULTIVAC Sepp Haggenmüller SE & Co. KG, 87787 Wolfertschwenden (DE)
(72) Erfinder: ICKERT, Lars, 87437 Kempten (DE)
(74) Vertreter: Grünecker Patent- und Rechtsanwälte PartG mbB

(56) Entgegenhaltungen:
- EP-A1- 3 409 600
- WO-A1-2004/022431
- WO-A1-2018/024382
- DE-A1- 3 404 451
- DE-A1-102012 020 359

## Beschreibung

Die vorliegende Erfindung betrifft eine Verpackungsmaschine gemäß dem Anspruch 1. Außerdem bezieht sich die Erfindung auf ein Verfahren gemäß dem unabhängigen Anspruch 11.

In der Praxis werden Schalenverschließmaschinen eingesetzt, die auch Traysealer genannt werden. Solche Verpackungsmaschinen sind vorrangig zum Versiegeln von muldenartigen Verpackungsunterteilen ausgebildet. Dagegen hat sich deren Verwendung zum Verschließen flach ausgebildeter Produktträger als problematisch erwiesen. Vor allen Dingen ist es technisch besonders herausfordernd, flach ausgebildete Verpackungsunterteile, beispielsweise Kartonzuschnitte (Paperboards), präzise zu transportieren, für einen daran durchzuführenden Prozess, beispielsweise für einen Siegel-, Entlüftungs-, Belüftungs- und/oder Schneidvorgang, zu ergreifen und/oder innerhalb einer Siegelstation zu zentrieren.

Die WO 2018/024382 A1 offenbart eine Verpackungsmaschine mit in Produktionsrichtung nacheinander angeordneten Arbeitsstationen zur Herstellung einzelner Verpackungen mit einem flachen Produktträger sowie einem darauf mittels einer Oberfolie gasdicht eingeschlossenen Produkt. In Produktionsrichtung betrachtet sind bei der Verpackungsmaschine hintereinander eine Produktträgerabwurfstation, eine Produktabgabestation, eine Siegelstation zum Durchführen eines Siegelvorgangs sowie eine Sammelstation für fertig hergestellte Verpackungen angeordnet. Außerhalb der Siegelstation ist für einen Schneidvorgang eine Schneideinheit positioniert, an welcher die Oberfolie zur Herstellung einer Deckelfolie vorbeigeführt wird.

Die Siegelstation der WO 2018/024382 A1 umfasst ein Werkzeugoberteil und ein Werkzeugunterteil. Das Werkzeugoberteil ist als höhenverstellbarer Siegelrahmen ausgebildet, der für den Siegelvorgang auf das ihm zugewandte, ebenfalls rahmenartig, allerdings stationär ausgebildete Werkzeugunterteil abgesenkt wird. In der geschlossenen Stellung der Siegelstation wird zwischen dem Werkzeugunterteil und dem nach unten verlagerten Werkzeugoberteil ein Transportbandabschnitt eingeklemmt. Der Transportbandabschnitt gehört zu einem Förderband, das sich horizontal, auf einem festgelegten Niveau entlang sämtlicher oben genannten Arbeitsstationen erstreckt und taktweise an diesen, in Abhängigkeit der daran ablaufenden Verfahrensschritte vorbeigeführt wird.

Nachteilig an der oben beschriebenen Verpackungsmaschine ist, dass darauf nur spezielle Verpackungsformate herstellbar sind. Dies liegt insbesondere daran, dass an der Siegelstation das rahmenartig ausgebildete Werkzeugoberteil und das dazu komplementär ausgebildete Werkzeugunterteil die Verpackungsgeometrie festlegen. Ein Umrüstvorgang hinsichtlich anderer Verpackungsformate ist damit sehr aufwendig, eigentlich weder praktisch noch wirtschaftlich durchführbar.

Hinzu kommt, dass bei der WO 2018/024382 A1 das Förderband, das Werkzeugunterteil sowie der Produktträger selbst speziell für einen Belüftungsvorgang ausgebildet sind, weswegen der Einsatzbereich der Verpackungsmaschine weiter lediglich einer speziellen Anwendung dient.

Die DE 10 2012 001 817 A1 offenbart eine Verpackungsmaschine, die als Schalenverschließmaschine ausgebildet ist. Die Schalenverschließmaschine ist mit einer Siegelstation ausgestattet, die ein Werkzeugoberteil mit einem darin beweglich gelagerten Siegelwerkzeug aufweist. Unterhalb des Werkzeugoberteils ist als Auflager für einen Siegelvorgang ein Siegelklemmrahmen angeordnet, an welchem für den Siegelvorgang Verpackungsmulden eingeklemmt bereitgehalten werden. Für den Siegelvorgang werden die Verpackungsmulden dem Siegelklemmrahmen mittels eines unterhalb des Klemmrahmens positionierten Transportbands übergeben. Nach der Übergabe wird das Transportband für den anschließenden Siegelvorgang aus seiner ursprünglichen Transportposition abgesenkt, wodurch es sich von den Verpackungsmulden entfernt. Beim Siegelvorgang werden die Siegelandruckkräfte auf den als Siegelgegenlager ausgebildeten Siegelklemmrahmen ausgeübt. Auf das abgesenkte, vom Siegelvorgang isoliert positionierte Transportband werden keinerlei Siegelandruckkräfte übertragen. Diese Maschine eignet sich hervorragend zum Transport, Ergreifen und Versiegeln schalenartig ausgebildeter Verpackungsunterteile. Zur Weiterverarbeitung flach ausgebildeter Kartonzuschnitte kommt sie allerdings nicht in Frage.

EP 3 409 600 A1, DE 10 2012 020 359 A1 und WO 2004/022431 A1 offenbaren jeweils eine Siegelstation mit einem Werkzeugunterteil, das eine Schalenaufnahme aufweist, welche während des Siegelprozesses als Gegendrucklager für das im Werkzeugoberteil gelagerte Siegelwerkzeug vorliegt.

Aufgabe der Erfindung ist es, eine Verpackungsmaschine sowie ein Verfahren für deren Betrieb zur Verfügung zu stellen, womit sich verschiedene Verpackungsformate mit einem flachen Produktträger einfach herstellen lassen. Diesbezüglich soll die erfindungsgemäße Verpackungsmaschine aus Kostengründen ein hohes Maß standardisierter Baugruppen aufweisen und insbesondere durch geringen Umrüstaufwand an unterschiedliche Verpackungsformate anpassbar sein.

Die oben genannte Aufgabe wird mittels einer Verpackungsmaschine gemäß dem Anspruch 1 und mittels eines Verfahrens gemäß dem Anspruch 10 gelöst. Vorteilhafte Ausführungsformen der Erfindung sind anhand der jeweiligen Gegenstände der Unteransprüche gegeben.

Die Erfindung bezieht sich auf eine Verpackungsmaschine zur Herstellung einzelner Verpackungen mit jeweils einem insbesondere flach ausgebildeten Produktträger, beispielsweise einem Kartonzuschnitt, sowie einer Oberfolie, die ein auf dem Produktträger positioniertes Produkt gasdicht einschließt. Die erfindungsgemäße Verpackungsmaschine umfasst eine Siegelstation mit einem Werkzeugoberteil, das einen Außenrahmen sowie mindestens ein beweglich darin gelagertes Siegelwerkzeug für einen Siegelvorgang aufweist, und mit einem Werkzeugunterteil, das ein Bandfördermodul mit mindestens einem daran gelagerten Transportband umfasst. In einer Schließstellung der Siegelstation sind das Werkzeugoberteil und das Werkzeugunterteil derart aufeinander zubewegt, dass sie, insbesondere der am Werkzeugoberteil ausgebildete Außenrahmen zusammen mit dem Bandfördermodul, eine Siegelkammer ausbilden.

Erfindungsgemäß ist in der Schließstellung der Siegelstation das in der Siegelkammer gelagerte Siegelwerkzeug für den Siegelvorgang aus einer Ruheposition, in welcher es vom Transportband beabstandet gelagert ist, in eine an das Transportband näher hingerückte Siegelposition absenkbar, in welcher das Transportband zumindest abschnittsweise als Gegendrucklager eine vom Siegelwerkzeug ausgeübte Siegelkraft aufnimmt.

In anderen Worten kommt bei der Erfindung beim Siegelvorgang als Gegendrucklager für das aus der Ruheposition in die Siegelposition abgesenkte Siegelwerkzeug das Bandfördermodul zum Einsatz. Außer seiner eigentlichen Transportfunktion nimmt das Bandfördermodul daher zusätzlich die Funktion des Siegelwerkzeugunterteils ein. Für diese Doppelfunktion ist das Bandfördermodul, vorzugsweise an einem Maschinenrahmen der Verpackungsmaschine oder gesondert davon, derart gelagert, dass es sämtliche vom Siegelwerkzeug abgegebenen Siegelandrückkräfte aufnimmt.

Die Erfindung bietet den Vorteil, dass das Bandfördermodul sowohl als Transportmittel als auch in Funktion des Siegelwerkzeugunterteils universell zur Herstellung verschiedener Verpackungsformate, insbesondere ein- oder mehrspurig in Transportrichtung und/oder ein- oder mehrreihig quer zur Transportrichtung, einsetzbar ist. Das am Werkzeugoberteil im Außenrahmen beweglich gelagerte Siegelwerkzeug kann vorteilhaft als Austauscheinheit zum Einsatz kommen, d.h. ohne großen Umrüstaufwand gegen ein anderes ersetzt oder ergänzt werden. Demzufolge verfügt die erfindungsgemäße Verpackungsmaschine hinsichtlich daran eingesetzter Funktionseinheiten über einen hohen Standardisierungsgrad, was letztendlich im Sinne des Anwenders dazu beiträgt, dass Umrüstarbeiten praktisch und vor allem kostengünstig durchführbar sind. Die erfindungsgemäße Verpackungsmaschine ist daher insbesondere zur Herstellung verschiedener flacher Verpackungsformate prädestiniert.

Das bei der Erfindung eingesetzte Bandfördermodul kann insgesamt und vor allem zusammen mit dem Werkzeugoberteil eine kompakte Bauweise aufweisen, sodass die Gesamtkonstruktion der Verpackungsmaschine in Summe betrachtet kleiner als herkömmliche Maschinen herstellbar ist. Dadurch entsteht auch ein Potential für ein geringeres Eigengewicht sowie für eine energiebewusstere Arbeitsweise der Verpackungsmaschine.

Die erfindungsgemäße Verpackungsmaschine eignet sich ausgezeichnet für einen hygienischen Betrieb, wobei sich daran insbesondere das Bandfördermodul hervorragend reinigen lässt. Außerdem ist das am Bandfördermodul gelagerte Transportband zweckmäßig als Verschleißgegenstand kostengünstig ersetzbar.

Vorzugsweise ist das Bandfördermodul bei geöffneter Siegelstation aus einer Transportposition heraus, in welcher dem daran vorgesehenen Transportband von außerhalb der Siegelstation die jeweiligen mit Produkten beladenen Produktträger zuführbar sind, zum Bilden der Siegelkammer in Richtung des darüber angeordneten Außenrahmens anhebbar. Das Bandfördermodul ist dort in einer Siegelposition gelagert, in welcher es für den Siegelvorgang als Siegelwerkzeugunterteil zum Einsatz kommt. In dieser Lage werden die auf dem Bandfördermodul positionierten Produktträger auf ein Höhenniveau gebracht, auf welchem der Siegelvorgang an ihnen durchgeführt wird. Die höhenverstellbare Lagerung des Bandfördermoduls ist technisch viel einfacher realisierbar als eine dazu alternativ ausgebildete höhenverstellbare Lagerung des Werkzeugoberteils der Siegelstation, insbesondere dann, wenn daran eine Oberfolientransporteinheit befestigt ist.

Gemäß einer Ausführungsform weist das Werkzeugunterteil ein Hubwerk auf, mittels dessen das Bandfördermodul anhebbar ist. In technischer Hinsicht liegt das Werkzeugunterteil somit als multifunktionales Transfermittel vor, das sowohl zum horizontalen Transport, d.h. in Produktionsrichtung, als auch zum vertikalen Transport, d.h. in Hubrichtung, darauf liegender Produktträger konfiguriert ist. Das Bandfördermodul ist demzufolge für verschiedene zueinander orthogonal ausgerichtete Transportbewegungen der darauf positionierten Produktträger ausgebildet, wodurch es möglich wird, auf weitere Transfereinheiten, beispielsweise auf einen gesonderten Produktgreifer, zu verzichten. Das Hubwerk kann zur Höhenverstellung des Bandfördermoduls einen Servomotor aufweisen, der vorzugsweise basierend auf Prozessdaten, beispielsweise hinsichtlich an und/oder vor der Siegelstation erfasster Sensordaten, ansteuerbar ist.

Vorteilhaft ist es, wenn das Siegelwerkzeug und das Bandfördermodul zusammen zum Durchführen eines Schneidvorgangs in eine Schneidposition absenkbar sind. Das Siegelwerkzeug und das Bandfördermodul bilden dabei eine funktionale Einheit aus, deren synchronisierte Höhenverstellung das Durchtrennen der Oberfolie bewirkt.

Für eine kompakte Bauweise sieht es eine Variante der Erfindung vor, dass das Siegelwerkzeug mindestens ein Schneidmesser aufweist. Damit kann ein Schneidvorgang innerhalb der Siegelstation durchgeführt werden. Vorzugsweise ist das Schneidmesser umfangseitig direkt am Siegelwerkzeug befestigt. Vorzugsweise ist das Schneidmesser mittels des Siegelwerkzeugs erwärmbar. Dadurch kann das Schneidmesser die Oberfolie thermisch durchtrennen. Das Siegelwerkzeug erfüllt damit sowohl eine Siegel- als auch eine Schneidfunktion, ist sozusagen als Multifunktionswerkzeug ausgebildet. Vorzugsweise weist das Schneidmesser eine Schneidkante auf, die umfangseitig entlang einer am Siegelwerkzeug ausgebildeten Siegelfläche angeordnet ist. Für einen verbesserten Schneidvorgang kann die Schneidkante gegenüber der Siegelfläge einen geringfügigen Überstand aufweisen.

Vorzugsweise umfasst das Werkzeugoberteil einen Klemmrahmen zum Fixieren der Oberfolie, der in der Schließstellung der Siegelstation zwischen dem Außenrahmen und dem Bandfördermodul zur Ausbildung der Siegelkammer angeordnet ist. Der Klemmrahmen ist vorzugsweise als funktionaler Bestandteil des Werkzeugoberteils ausgebildet. Insbesondere kann der Klemmrahmen derart mit dem darüber angeordneten Außenrahmen zusammengeführt werden, dass dazwischen die Oberfolie eingeklemmt wird. Der Außenrahmen wirkt dann mit dem Klemmrahmen als Greifereinheit zusammen, womit sich die durch die Siegelstation geführte Oberfolie für die darin stattfindenden Arbeitsprozesse fixieren lässt.

Vorteilhaft ist es, wenn der Klemmrahmen aus einer Ausgangslage heraus, in welcher er bei geöffneter Siegelstation in einer vorbestimmten Höhe oberhalb des Bandfördermoduls positioniert ist, zum darüber positionierten Außenrahmen des Werkzeugoberteils anhebbar ist, um dazwischen die Oberfolie einzuklemmen. Eine dafür vorgesehene Antriebseinheit kann am Werkzeugunterteil oder am Werkzeugoberteil vorgesehen sein.

Eine Variante sieht vor, dass in der Schließstellung der Siegelstation zumindest abschnittsweise über den Außenrahmen und den Klemmrahmen mindestens ein Be- und/oder Entlüftungskanal ausgebildet ist, durch den eine gewünschte Verpackungsatmosphäre hergestellt werden kann. Indem diese Funktion über das Werkzeugoberteil der Siegelstation zur Verfügung gestellt wird, kann das als Werkzeugunterteil ausgebildete Bandfördermodul, insbesondere das daran geführte Transportband, technisch einfach ausgebildet sein. Gemäß einer Ausführungsform ist am Klemmrahmen mindestens eine Abdichtleiste angeordnet, die in eine Aussparung des Außenrahmens hineingeführt wird, wenn in der Schließstellung der Siegelstation der Be- und/oder Entlüftungskanal ausgebildet ist. Die insbesondere zumindest teilweise gummiert hergestellte Abdichtleiste stellt eine zuverlässige Abdichtfunktion zur Umgebung der Siegelstation her und bewirkt darüber hinaus, dass der Klemmrahmen sanft, d.h. gedämpft, und insbesondere auch geräuschlos mit dem darüber angeordneten Außenrahmen zusammengeführt werden kann. Die Abdichtleiste kann für diese Zwecke integral oder als eigenständiges Bauteil am Klemmrahmen ausgebildet sein. Alternativ könnte in technischer Umkehr die Abdichtleiste auch am Außenrahmen und die Aussparung am Klemmrahmen ausgebildet sein.

Für den erfindungsgemäßen Einsatzzweck ist es von Vorteil, wenn das Bandfördermodul ein wärmebeständiges Transportband umfasst, das vorzugsweise im Kern mindestens ein gewobenes Gurtmaterial aufweist. Raffiniert wäre insbesondere ein Transportband, das zumindest teilweise eine metallische Struktur, beispielsweise in Form einer Gitternetzstruktur, einschließt, sodass es, beispielsweise mittels einer am Werkzeugunterteil der Siegelstation vorgesehenen Induktionsheizung, für eine verbesserte Abdichtfunktion beim Ausbilden der Siegelkammer auf einem gewünschten Temperaturniveau gehalten werden kann.

Vorzugsweise ist am Bandfördermodul zumindest eine Abstützeinheit für den Klemmrahmen vorgesehen, auf welcher der Klemmrahmen zumindest temporär in einer vorbestimmten Position während eines Arbeitstakts der Verpackungsmaschine aufsitzt. Dabei kommt die Abstützeinheit als Auflager für den funktional am Werkzeugoberteil befestigten Klemmrahmen zum Einsatz, was insgesamt zu einer sehr stabilen Bauweise führt. Dadurch wird es insbesondere ermöglicht, den Klemmrahmen in Leichtbauweise herzustellen.

Eine Ausführungsform der Erfindung sieht vor, dass die Verpackungsmaschine eine Oberfolientransporteinheit und/oder mindestens ein separat ansteuerbares Zuführband aufweist, das in Transportrichtung dem Bandfördermodul der Siegelstation vorangestellt positioniert ist. Anhand der Oberfolientransporteinheit kann die für den Herstellungsprozess eingesetzte Oberfolie positionsgenau der Siegelstation eingangsseitig zu- und ausgangsseitig als Restgitterstruktur oder umgekehrt abgeführt werden. Eine robuste Bauweise kann insbesondere dadurch bereitgestellt werden, wenn die Oberfolientransporteinheit starr am Werkzeugoberteil der Siegelstation befestigt ist.

Eine vorteilhafte Variante sieht vor, dass das Transportband mindestens eine Führung für die Produktträger aufweist und/oder ein zum Siegelwerkzeug hingewandter Transportbandabschnitt des Bandfördermoduls zumindest teilweise auf einer für den Siegelvorgang als Gegenlager am Bandfördermodul ausgebildeten Gleitplatte angeordnet ist. Dadurch lassen sich die Produktträger einerseits präzise der Siegelstation zuführen und sie können andererseits, selbst dann, wenn auf ihnen gewichtige Produkte platziert sind, stabil in einer gewünschten Position während des Siegelvorgangs gehalten werden.

Vorzugsweise sind das Siegelwerkzeug und das Bandfördermodul dazu konfiguriert, in Arbeitsrichtung der Verpackungsmaschine mehrspurig und/oder quer zur Arbeitsrichtung mehrreihig Verpackungen zu versiegeln. Das Bandfördermodul eignet sich hervorragend dazu, flache Produktträger in einer vorbestimmten Matrix für den Siegelvorgang bereitzustellen. Entsprechend einer aus dem Bandfördermodul bereitgestellten Produktträgermatrix kann das Siegelwerkzeug als Siegelplatte mit mehreren Siegelkavitäten ausgebildet sein. Dadurch wird eine große Durchsatzrate hergestellter Verpackungen erreicht.

Vorzugsweise ist das Bandfördermodul für einen in hygienischer Hinsicht verbesserten Betrieb, insbesondere im Bereich eines daran ausgebildeten unteren Transportbandabschnitts, mit mindestens einem Abstreifer ausgestattet, der dazu ausgebildet ist, dass an ihm vorbeigeführte Transportband von Verunreinigungen zu befreien.

Die Erfindung betrifft ebenfalls ein Verfahren zum Betrieb einer Verpackungsmaschine zur Herstellung einzelner Verpackungen mit jeweils einem insbesondere flach ausgebildeten Produktträger sowie einer Oberfolie, die ein auf dem Produktträger positioniertes Produkt gasdicht einschließt. Verfahrenstechnisch wird dabei zunächst eine Siegelstation in eine Schließstellung für einen Siegelvorgang verstellt, in welcher ein Werkzeugunterteil und ein Werkzeugoberteil der Siegelstation derart aufeinander zubewegt sind, dass insbesondere ein Außenrahmen des Werkzeugoberteils und ein Bandfördermodul des Werkzeugunterteils in wesentlichen Teilen eine Siegelkammer ausbilden.

Erfindungsgemäß wird in der Schließstellung der Siegelstation mindestens ein in der Siegelkammer beweglich am Werkzeugoberteil gelagertes Siegelwerkzeug für den Siegelvorgang aus einer Ruheposition, in welcher es von einem Transportband des Bandfördermoduls beabstandet gelagert ist, in eine an das Transportband näher herangerückte Siegelposition abgesenkt, in welcher das Transportband zumindest abschnittsweise als Gegendrucklager eine vom Siegelwerkzeug ausgeübte Siegelkraft aufnimmt.

Das beim erfindungsgemäßen Verfahren als Siegelwerkzeugunterteil eingesetzte Bandfördermodul bildet insgesamt ein multifunktionales Unterteil der Siegelstation, weil es technisch zum Transport, zum Bilden der Siegelkammer, und auch als Gegendrucklager für den Siegelvorgang eingesetzt wird.

Vorteilhaft ist es, wenn das Bandfördermodul bei geöffneter Siegelstation in einer Transportposition bereitgestellt wird, in welcher dem daran vorgesehenen Transportband von außerhalb der Siegelstation die jeweiligen mit Produkten beladenen Produktträger zugeführt werden, und dann zum Bilden der Siegelkammer das Bandfördermodul in Richtung des darüber angeordneten Außenrahmens verlagert wird. Das Bandfördermodul ist demzufolge für verschiedene zueinander orthogonal ausgerichtete Transportbewegungen der darauf positionierten Produktträger ausgebildet, wodurch es möglich wird, auf weitere Transfereinheiten, beispielsweise auf einen gesonderten Produktgreifer, zu verzichten.

Zum Erreichen eines besonders wirtschaftlichen Betriebs an der Verpackungsmaschine werden vom Siegelwerkzeug beim Siegelvorgang in Arbeitsrichtung der Verpackungsmaschine mehrspurig und/oder quer zur Arbeitsrichtung mehrreihig Verpackungen je Maschinentakt auf dem Bandfördermodul versiegelt.

Eine Variante sieht vor, dass das Siegelwerkzeug und das Bandfördermodul zusammen, d.h. als funktional gekoppelte Einheit, nach dem Siegelvorgang zum Durchführen eines Schneidvorgangs an der Oberfolie in eine Schneidposition abgesenkt werden. Hierbei können das Siegelwerkzeug sowie das Bandfördermodul, auf welchem das Siegelwerkzeug aufsitzt, für den Schneidvorgang zueinander synchronisiert abgesenkt werden. Dadurch wird die in der Siegelkammer eingeklemmte Oberfolie gespannt und entlang eines Umfangs des Produktträgers, insbesondere hinsichtlich dessen Randbereichs ein Stück weit nach innen versetzt, d.h. auf dem Produktträger durchtrennt, sodass der Schnitt der Oberfolie als sogenannter Insidecut zustande kommt.

Gemäß einer Ausführungsform wird in der Schließstellung der Siegelstation zumindest abschnittsweise über den Außenrahmen und einen daran heranführbaren, zum Einklemmen der Oberfolie ausgebildeten Klemmrahmen mindestens ein Be- und/oder Entlüftungskanal ausgebildet, durch den eine gewünschte Verpackungsatmosphäre in den hergestellten Verpackungen erzeugt werden kann.

Erfindungsgemäße Ausführungsbeispiele werden anhand der beigefügten Zeichnungen näher beschrieben. Dabei zeigen:
- Fig.1A: eine schematisch dargestellte, erfindungsgemäße Verpackungsmaschine in einem ersten Betriebszustand;
- Fig. 1B: die Verpackungsmaschine aus Fig. 1A in einem zweiten Betriebszustand;
- Fig. 2A: eine schematische Darstellung einer geöffneten Siegelstation der erfindungsgemäßen Verpackungsmaschine;
- Fig. 2B: eine geschlossene Darstellung der in Fig. 2A gezeigten Siegelstation zum Bilden einer Siegelkammer;
- Fig.2C: die geschlossene Siegelstation aus Fig. 2B mit einem darin stattfindenden Siegelvorgang;
- Fig. 2D: die Siegelstation in einer Stellung zum Durchführen eines Schneidvorgangs einer darin fixierten Oberfolie;
- Fig. 3: eine vergrößerte Darstellung der Siegelstation aus Fig. 2D zur Verdeutlichung des darin durchgeführten Schneidvorgangs;
- Fig. 4A - 4G: eine detailliertere Darstellung der Verfahrensschritte zum Betrieb der Siegelstation einer erfindungsgemäßen Verpackungsmaschine;
- Fig. 5: eine vergrößerte Detailschnittdarstellung der bei der erfindungsgemäßen Verpackungsmaschine eingesetzten Siegelstation; und
- Fig. 6: eine schematische Darstellung eines bei der Erfindung als Werkzeugunterteil der Siegelstation einsetzbaren Bandfördermoduls mit mehrspuriger Produktführung.

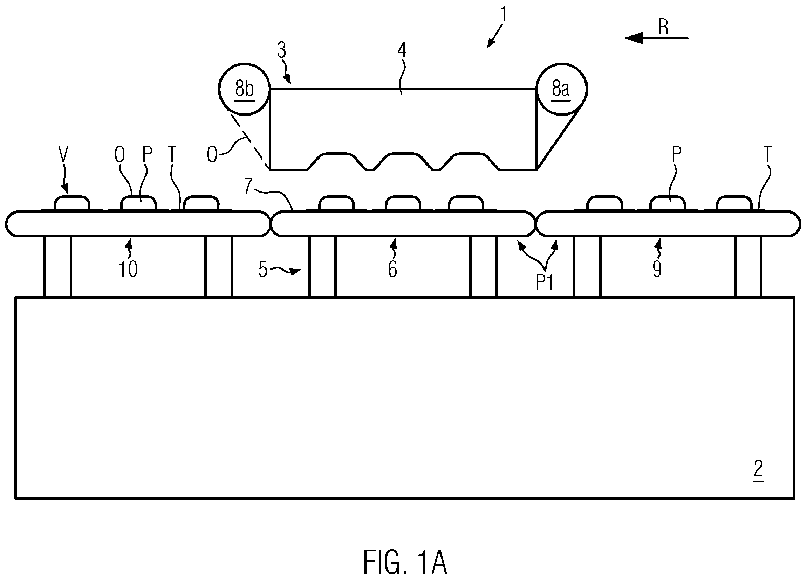

Fig. 1A zeigt eine Verpackungsmaschine 1 zur Herstellung einzelner Verpackungen V mit jeweils einem insbesondere flach ausgebildeten Produktträger T, der insbesondere in Form eines Kartonzuschnitts vorliegt, sowie einer Oberfolie O, die mindestens ein auf dem Produktträger T positioniertes Produkt P, beispielsweise ein Lebensmittelprodukt, gasdicht einschließt.

Die Verpackungsmaschine 1 umfasst einen Maschinenrahmen 2, auf welchem eine Siegelstation 3 gelagert ist. Die Siegelstation 3 besitzt ein Werkzeugoberteil 4 und ein Werkzeugunterteil 5. Das Werkzeugunterteil 5 ist als höhenverstellbares Bandfördermodul 6 ausgebildet, das in Transportrichtung R mindestens ein Transportband 7 aufweist.

Gemäß Fig. 1A umfasst die Verpackungsmaschine 1 ferner eine Oberfolientransporteinheit 8a, 8b, die am Werkzeugoberteil 4 eingangs- sowie ausgangsseitig befestigt ist. Die Oberfolientransporteinheit 8a, 8b ist zum Transport der Oberfolie O durch die Siegelstation 3 ausgebildet. In der Figur 1A ist die Oberfolientransporteinheit 8a, 8b derart am Werkzeugoberteil 4 fixiert, dass sie an der Verpackungsmaschine 1 eine fixe Position während des Betriebs beibehält.

In Transportrichtung R ist ein separat ansteuerbares Zuführband 9 dem Bandfördermodul 6 der Siegelstation 3 vorangestellt gelagert. Das Zuführband 9 ist dazu konfiguriert, der Siegelstation 3 gemäß einem Maschinentakt der Verpackungsmaschine 1 kontinuierlich, vornehmlich gruppiert Produktträger T mit darauf platzierten Produkten P zuzuführen. In Transportrichtung R der Siegelstation 3 nachgelagert ist ein Abführband 10 positioniert, welchem vom Bandfördermodul 6 der Siegelstation 3 fertig hergestellte Verpackungen V zum Weitertransport übergeben werden können.

In Fig. 1A nehmen das Zuführband 9, das nachgeordnete Bandfördermodul 6 sowie das dahinter in Transportrichtung R positionierte Abführband 10 jeweils eine Transportposition P1 ein. In der Transportposition P1 lassen sich die Produkte P entlang der jeweiligen Bandabschnitte horizontal in Transportrichtung R durch die Verpackungsmaschine 1 transportieren.

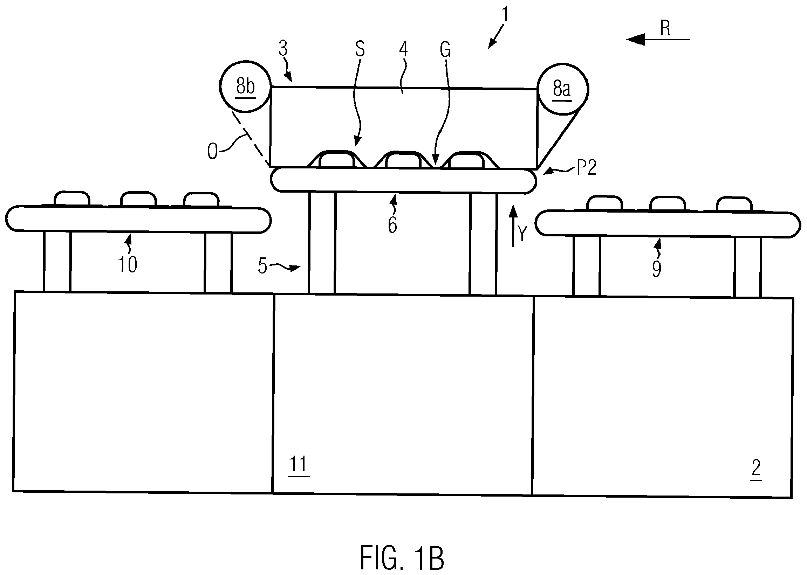

Fig. 1B zeigt die Verpackungsmaschine 1 in einer Betriebssituation, in welcher das Bandfördermodul 6 aus seiner Transportposition P1 heraus, in welcher dem daran vorgesehenen Transportband 7 von außerhalb der Siegelstation 3 die jeweiligen mit Produkten P beladenen Produktträger T zuführbar sind, in Richtung Y des darüber angeordneten Werkzeugoberteils 4 angehoben ist. Das Zuführband 9 und das Abführband 10 verbleiben in der Transportposition P1.

Zur Höhenverstellung des Bandfördermoduls 6 verfügt das Werkzeugunterteil 5 über ein Hubwerk 11, welches gemäß Fig. 1B am Maschinenrahmen 2 der Verpackungsmaschine 1 gelagert ist. In der angehobenen Lage gemäß Fig. 1B nimmt das Bandfördermodul 6 eine Siegelposition P2 ein, in welcher das Bandfördermodul 6 mit dem Werkzeugoberteil 4 der Siegelstation 3 zusammengeführt ist. Gemäß dieser Anordnung nimmt die Siegelstation 3 eine Schließstellung S zur Durchführung eines Siegelvorgangs G ein.

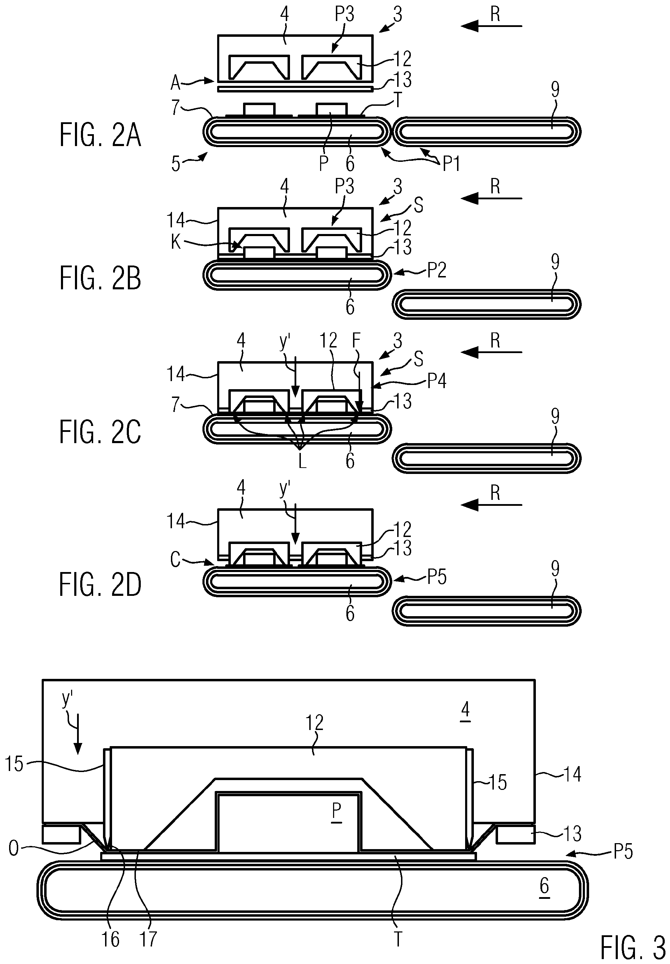

Die Fig. 2A bis 2D zeigen in funktionaler Darstellung an der Siegelstation 3 stattfindende Arbeitsprozesse.

Fig. 2A zeigt die Siegelstation 3 in einer geöffneten Stellung A. Das Zuführband 9 sowie das Bandfördermodul 6 sind hintereinander in Transportrichtung R jeweils in der Transportposition P1 gelagert.

Fig. 2A zeigt auch, dass im Werkzeugoberteil 4 mindestens ein Siegelwerkzeug 12 angeordnet ist. Das Siegelwerkzeug 12 ist innerhalb des Werkzeugoberteils 3 beweglich gelagert. Des Weiteren zeigt Fig. 2A einen Klemmrahmen 13, der oberhalb des Bandfördermoduls 6 und unterhalb des Siegelwerkzeugs 12 angeordnet ist. Der Klemmrahmen 13 kann als funktionaler Bestandteil des Werkzeugoberteils 4 der Siegelstation 3 ausgebildet sein und ist vor allem zum Fixieren der Oberfolie O innerhalb der Siegelstation 3 vorgesehen. Fig. 2A zeigt das im Werkzeugoberteil 4 positionierte Siegelwerkzeug 12 in einer Ruheposition P3, in welcher es eine ins Werkzeugoberteil 4 hineinversetze, angehobene Stellung einnimmt.

Fig. 2B zeigt die Siegelstation 3 in der Schließstellung S. Das Bandfördermodul 6 befindet sich jetzt in der angehobenen Siegelposition P2 (siehe Figur 1B). Das Bandfördermodul 6, der Klemmrahmen 13 sowie ein am Werkzeugoberteil 4 ausgebildeter Außenrahmen 14 bilden in der Schließstellung S eine geschlossene Siegelkammer K. Gemäß Fig. 2B befindet sich das Siegelwerkzeug 12 innerhalb der Siegelkammer K noch in seiner angehobenen, vom Transportband 7 beabstandeten Ruheposition P3.

Fig. 2C zeigt einen Siegelvorgang G. Die Siegelstation 3 ist dabei weiterhin in der Schließstellung S angeordnet. Allerdings ist nun für den Siegelvorgang G das am Werkzeugoberteil 4 innerhalb der Siegelkammer K gelagerte Siegelwerkzeug 13 aus der in Fig. 2B gezeigten Ruheposition P3 in eine an das Transportband 7 des Bandfördermoduls 6 näher hingerückte Siegelposition P4 abgesenkt gelagert, in welcher das Transportband 7 zumindest abschnittsweise als Gegendrucklager L eine vom Siegelwerkzeug 13 ausgeübte Siegelkraft F aufnimmt. Für den Siegelvorgang G wird das Siegelwerkzeug 13 innerhalb der Siegelkammer K entlang einer Verstellrichtung Y' nach unten bewegt.

Fig. 2D zeigt einen Schneidvorgang C. Dabei werden das Siegelwerkzeug 13 und das Bandfördermodul 6 zusammen, d.h. synchronisiert zueinander, zum Durchführen des Schneidvorgangs C in eine Schneidposition P5 abgesenkt. Bei dieser aneinander gekoppelten Verstellbewegung bilden das Siegelwerkzeug 13 sowie das Bandfördermodul 6 einen funktionalen Verbund, der sich entlang der Verstellrichtung Y' vom Außenrahmen 14 des Werkzeugoberteils 4 der Siegelstation 3 nach unten wegbewegt. Dagegen verbleiben der Klemmrahmen 13 und der Außenrahmen 14 als Greifereinheit für die Oberfolie O in der zum Bilden der Siegelkammer K eingenommenen Lage positioniert, so dass die dazwischen eingespannte Oberfolie O mithilfe der nach unten gerichteten Abwärtsbewegung des Siegelwerkzeugs 12 zusammen mit dem Bandfördermodul 6 mittels eines in Figur 3 gezeigten Scheidmessers 15 durchtrennt wird.

Fig. 3 zeigt eine vergrößerte Darstellung des Schneidvorgangs C gemäß der Fig. 2D. In Fig. 3 befinden sich das Siegelwerkzeug 12 sowie das darunter positionierte Bandfördermodul 6 jeweils in der Schneidposition P5 zum Durchtrennen der Oberfolie O. Indem das Siegelwerkzeug 12 zusammen mit dem Bandfördermodul 6 entlang der Verstellrichtung Y' in die Schneidposition P5 abgesenkt wird, kann die zwischen dem stationär gelagerten Außenrahmen 14 und dem daran anliegenden Klemmrahmen 13 eingeklemmte Oberfolie O mit dem Schneidmesser 15 vollends durchtrennt werden.

Fig. 3 zeigt, dass das Schneidmesser 15 am Siegelwerkzeug 12 befestigt ist. Das Schneidmesser 15 weist eine Schneidkante 16 auf, die ringsum umlaufend einer am Siegelwerkzeug 12 ausgebildeten Siegelfläche 17 ausgebildet ist und über ein Niveau der Siegelfläche 17 hinaus in Richtung des darunter positionierten Bandfördermoduls 6 einen geringfügigen Überstand aufweist. Dies ermöglicht einen besonders sauberen Schnitt der Oberfolie O direkt auf dem Produktträger T.

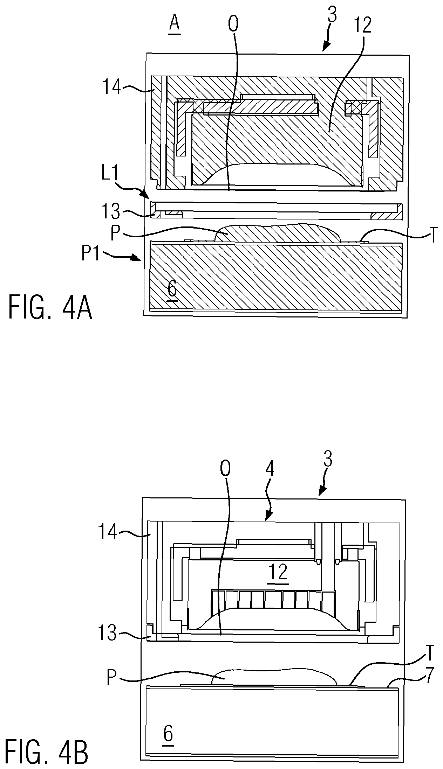

Die Fig. 4A bis 4G zeigen weitere, ausführungsgemäße Details der Siegelstation 3 zum Herstellen der Verpackungen V. Die Siegelstation 3 ist in Schnittansicht in Transportrichtung R dargestellt.

Fig. 4A zeigt die Siegelstation 3 in der geöffneten Stellung A. In der geöffneten Stellung A befindet sich das Bandfördermodul 6 in der Transportposition P1. Der darüber positionierte Klemmrahmen 13 ist in einer ersten Lage L1 zwischen dem Bandfördermodul 6 und dem darüber angeordneten Außenrahmen 14 des Werkzeugoberteils 4 gelagert. Zwischen dem Außenrahmen 14 und dem darunter positionierten Klemmrahmen 13 wird die Oberfolie O bereitgestellt. Auf dem Bandfördermodul 6 ist ein Produktträger T mit einem darauf platzierten Produkt P positioniert.

Fig. 4B zeigt den Klemmrahmen 13 in einer zweiten Lage L2, in welcher er im Vergleich zur ersten Lage L1 angehoben, am Außenrahmen 14 des Werkzeugoberteils 4 der Siegelstation 3 anliegt. In der zweiten Lage L2 wird zwischen dem Klemmrahmen 13 und dem darüber positionierten Außenrahmen 14 die Oberfolie O eingeklemmt. In Fig. 4B ist das Bandfördermodul 6 weiterhin in der Transportposition P1 gelagert.

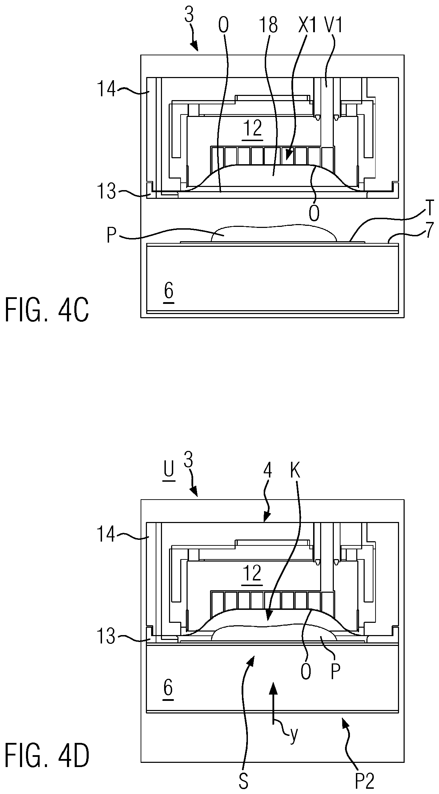

Fig. 4C zeigt einen ersten Formvorgang X1 an der Oberfolie O. Dabei wird die zwischen dem Klemmrahmen 13 und dem Außenrahmen 14 eingeklemmte Oberfolie O mittels eines am Siegelwerkzeug 12 anliegenden Vakuums V1 in eine am Siegelwerkzeug 12 ausgebildete Kavität 18 hineingezogen. Die Kavität 18 ist hinsichtlich einer Geometrie des Produkts P ausgebildet. Dieser Formvorgang bewirkt, dass die nachfolgenden Verfahrensschritte besser ablaufen können.

Fig. 4D zeigt die Siegelstation 3 in der Schließstellung S. In der Schließstellung S ist das Bandfördermodul 6 aus seiner Transportposition P1 heraus, in welcher dem daran vorgesehenen Transportband 7 von außerhalb der Siegelstation 3 die jeweiligen mit Produkten P beladenen Produktträger T zuführbar sind, zum Bilden der Siegelkammer K in Richtung Y des darüber angeordneten Außenrahmens 14 nach oben versetzt in der Siegelposition P2 positioniert. Die dadurch gebildete Siegelkammer K ist gegenüber der Umgebung U der Siegelstation 3 hermetisch abgeschlossen ausgebildet.

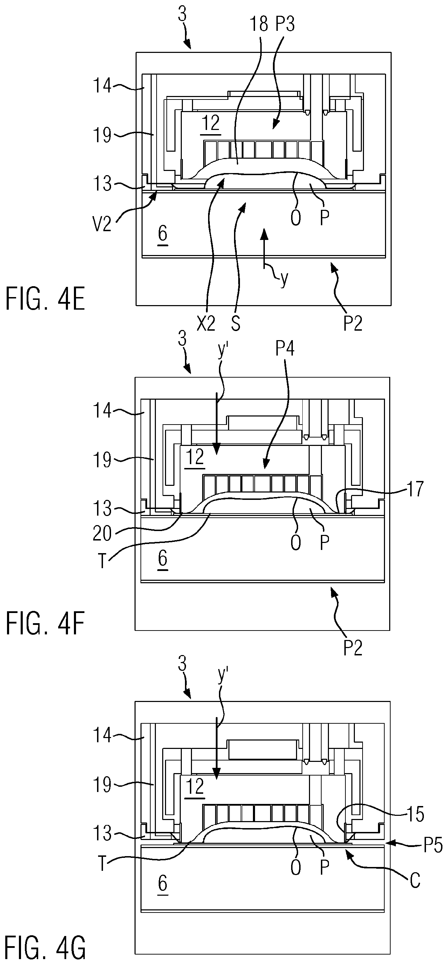

Fig. 4E zeigt einen zweiten Formvorgang X2 an der Oberfolie O. Der zweite Formvorgang X2 wird mithilfe eines Be- und/oder Entlüftungskanals 19 durchgeführt, der in der Schließstellung S der Siegelstation 3 über den Außenrahmen 14 und den Klemmrahmen 13 ausgebildet wird. Der Be- und/oder Entlüftungskanal 19 stellt eine Verbindung zum Verpackungsinneren her, um darin eine gewünschte Verpackungsatmosphäre zu erzeugen. Fig. 4E zeigt, dass über den Be- und/oder Entlüftungskanal 19 ein Produktvakuum V2 anliegt, anhand dessen die Oberfolie O aus der Kavität K des Siegelwerkzeugs 12 schlagartig zum Produkt P niedergezogen werden kann. Das für den ersten Formvorgang X1 angelegte Vakuum V1 kann derart geregelt reduziert werden, dass sich die Oberfolie O kontrolliert an die Oberfläche des Produkts P führen lässt. Die Oberfolie O liegt dann wie eine zweite Haut an der Oberfläche des Produkts P an, wodurch eine Skinverpackung herstellbar ist.

An dieser Stelle sei noch erwähnt, dass vor dem zweiten Formvorgang X2 über den Be- und/oder Entlüftungskanal 19 ein Begasungsvorgang durchführbar ist, mittels dessen das Produkt P mit einem, insbesondere zur Verbesserung der Haltbarkeit, tauglichen Gas begasbar ist.

In Fig. 4F befindet sich die Siegelstation 3 weiterhin in der Schließstellung S. Das innerhalb des Außenrahmens 14 am Werkzeugoberteil 4 beweglich positionierte Siegelwerkzeug 12 ist nun jedoch aus der in den vorangehenden Figuren 4A bis 4E gezeigten Ruheposition P3 in die Siegelposition P4 abgesenkt positioniert. Jetzt drückt die am Siegelwerkzeug 12 ausgebildete Siegelfläche 17 von oben die Oberfolie O auf den Produktträger T, um ringsum am Produktträger T eine Heißsiegelnaht 20 zu erzeugen.

Fig. 4G zeigt schließlich den Schneidvorgang C. Dabei werden das Siegelwerkzeug 12 und das Bandfördermodul 6 synchronisiert zum Durchtrennen der Oberfolie O weiter in Verstellrichtung Y' nach unten abgesenkt. Der Außenrahmen 14 sowie der daran positionierte Klemmrahmen 13 bleiben dabei in der gemäß den Fig. 4B bis 4F gezeigten Anordnung, so dass mittels der Abwärtsbewegung des Siegelwerkzeugs 12 und des Bandfördermoduls 6 der Schneidvorgang C an der Oberfolie O zustande kommt. Dabei wird die Oberfolie O derart gegen das Schneidmesser 15 gespannt, dass ein sauberer Schnitt entsteht. Dies wird insbesondere auch dadurch erreicht, dass das am Siegelwerkzeug 12 befestigte Schneidmesser 15 mithilfe des Siegelwerkzeugs 12 aufheizbar ist, so dass daran ein thermischer Trennvorgang zustande kommt.

Fig. 4G zeigt auch, dass das Schneidmesser 15 den Schneidvorgang C der Oberfolie O direkt auf dem Produktträger T verrichtet. Nachdem der Schneidvorgang C durchgeführt wurde, öffnet sich die Siegelstation 3 und kehrt in die geöffnete Stellung A gemäß Fig. 4A zurück, in welcher die fertig hergestellte Verpackung V vom Bandförderer 6 an das nachgelagerte Abführband 10 weitergegeben wird.

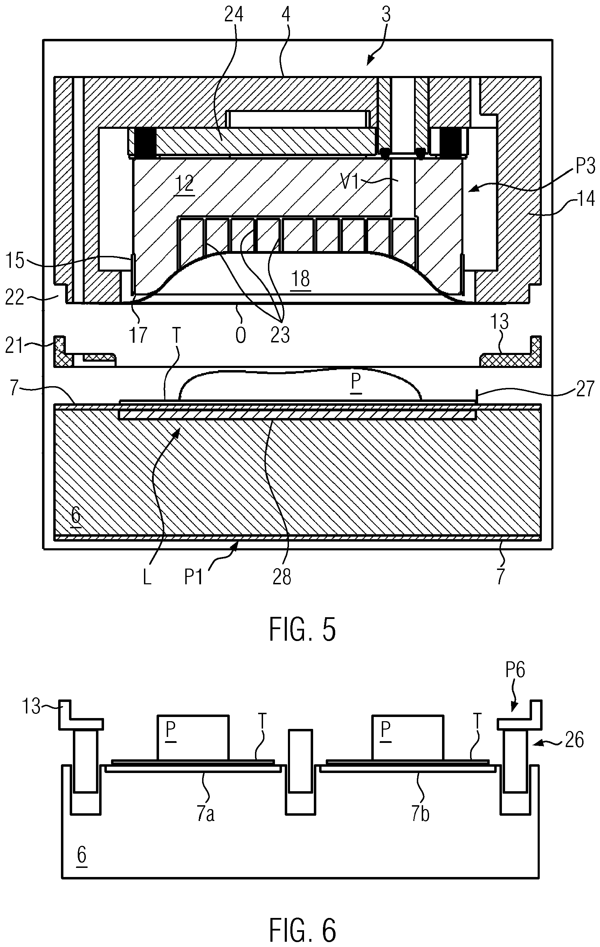

Fig. 5 zeigt in detaillierter Darstellung die Siegelstation 3 in ihrer geöffneten Stellung A. Das Bandfördermodul 6 ist in der Transportposition P1 positioniert. Auf dem Transportband 7 des Bandfördermoduls 6 befindet sich ein Produktträger T mit einem darauf platzierten Produkt P. Oberhalb des Bandfördermoduls 6 ist der Klemmrahmen 13 gelagert. Weiter oberhalb des Klemmrahmens 13 ist das Werkzeugoberteil 4 der Siegelstation 3 positioniert. Am Klemmrahmen 13 ist gemäß Fig. 5 eine Abdichtleiste 21 ringsum ausgebildet. Die Abdichtleiste 21 ist derart konfiguriert, dass sie in eine Aussparung 22 des Außenrahmens 14 hineingeführt wird, wenn die Siegelstation 3 in der Schließstellung S den Be- und/oder Entlüftungskanal 19 ausbildet.

Ferner zeigt Fig. 5, dass das Siegelwerkzeug 12 mehrere Vakuumkanäle 23 für den ersten Formvorgang X1 aufweist. Über die Vakuumkanäle 23 kann das Vakuum V1 angelegt werden, welches zum Hineinziehen der Oberfolie O in die Kavität 18 einstellbar ist.

Außerdem zeigt Fig. 5 eine Verstelleinheit 24, die dazu konfiguriert ist, das darunter positionierte Siegelwerkzeug 12 aus der in Fig. 5 gezeigten Ruheposition P3, in welcher das Siegelwerkzeug 12 im Außenrahmen 14 des Werkzeugoberteils 4 nach oben versetzt positioniert ist, in die Siegellage P4 (siehe z.B. Figur 4F) zu bewegen, in welcher das Siegelwerkzeug 12 von oben die Oberfolie O auf den Produktträger T heißversiegelt. Die Verstelleinheit 24 kann beispielsweise als aufblasbare Membran ausgebildet sein. Ferner zeigt Fig. 5, dass im Werkzeugoberteil 4 Anschläge 25 für das Siegelwerkzeug 12 ausgebildet sind. Die Anschläge 25 wirken als Dämpfer, wenn das Siegelwerkzeug 12 aus der Siegelposition P4 zurück in die Ruheposition P3 verstellt wird.

Gemäß der Figur 5 ist am Transportband 7 eine Führung 27 ausgebildet, entlang derer ausgerichtet die Produktträger T positionsgenau durch den Verpackungsprozess geführt werden können. Als Gegendrucklager L ist gemäß Figur 5 am Bandfördermodul 6 eine Gleitplatte 28 direkt unterhalb eines Abschnitts des Transportbands 7 angeordnet. Das Bandfördermodul 6 bildet anhand der Gleitplatte 28 ein robustes Auflager für das Siegelwerkzeug 12 beim Siegelvorgang G.

Fig. 6 zeigt das höhenverstellbare Bandfördermodul 6 in zweispuriger Ausführung. In dieser Variante sind am Bandfördermodul 6 zwei Transportbänder 7a, 7b parallel geführt angeordnet. Ferner zeigt Fig. 6, dass das Bandfördermodul 6 mit einer Abstützeinheit 26 versehen ist. Die Abstützeinheit 26 ist dazu ausgebildet, den Klemmrahmen 13 zumindest temporär während des Verpackungsprozesses in der gemäß Fig. 5 gezeigten Lage zu tragen, damit dieser während des Verpackungsprozesses formstabil gelagert ist. Die Abstützeinheit 26 kann dazu konfiguriert sein, den Klemmrahmen 13 an den darüber angeordneten Außenrahmen 14 zum Einklemmen der Oberfolie O hin zu bewegen. Die Abstützeinheit 26 ermöglicht insbesondere, dass der Klemmrahmen 13 selbst in Leichtbauweise ausgebildet sein kann.

Die erfindungsgemäße Verpackungsmaschine eignet sich hervorragend zur Herstellung einzelner Verpackungen V mit jeweils einem insbesondere flach ausgebildeten Produktträger T sowie einer Oberfolie O, die ein auf dem Produktträger T positioniertes Produkt P gasdicht einschließt. Hinsichtlich einer sich variierenden Produktgeometrie lässt sich die erfindungsgemäße Verpackungsmaschine schnell umrüsten. Dafür lässt sich insbesondere die Einheit des Siegelwerkzeugs 12 einfach aus dem Werkzeugoberteil 4 ausbauen und durch ein anderes spezifisches Siegelwerkzeug ersetzen. Ansonsten besitzt die erfindungsgemäße Verpackungsmaschine ein hohes Maß standardisierter Komponenten, so dass die Verpackungsmaschine insgesamt zur Herstellung variierender Verpackungsformate einsatzfähig ist. Insbesondere begünstigt der vorliegende Erfindungsgedanke eine standardisierte Ausführung des als Werkzeugunterteil 5 an der Siegelstation 3 verwendeten Bandfördermoduls 6, welches sowohl für einen vielseitigen Transport als auch zur Siegelkammerbildung eingesetzt wird.

## Patentansprüche

1. Verpackungsmaschine (1) zur Herstellung einzelner Verpackungen (V) mit jeweils einem insbesondere flach ausgebildeten Produktträger (T) sowie einer Oberfolie (O), die ein auf dem Produktträger (T) positioniertes Produkt (P) gasdicht einschließt, umfassend eine Siegelstation (3) mit einem Werkzeugoberteil (4), das einen Außenrahmen (14) sowie mindestens ein beweglich darin gelagertes Siegelwerkzeug (12) für einen Siegelvorgang (G) aufweist, und mit einem Werkzeugunterteil (5), das ein Bandfördermodul (6) mit mindestens einem daran gelagerten Transportband (7) umfasst, wobei in einer Schließstellung (S) der Siegelstation (3) das Werkzeugoberteil (4) und das Werkzeugunterteil (5) derart aufeinander zu bewegt sind, dass der Außenrahmen (14) zusammen mit dem Bandfördermodul (6) eine Siegelkammer (K) ausbildet, wobei in der Schließstellung (S) der Siegelstation (3) das in der Siegelkammer (K) gelagerte Siegelwerkzeug (12) für den Siegelvorgang (G) aus einer Ruheposition (P3), in welcher es vom Transportband (7) beabstandet gelagert ist, in eine an das Transportband (7) näher hin gerückte Siegelposition (P4) absenkbar ist, **dadurch gekennzeichnet, dass** in der Siegelposition (P4) das Bandfördermodul (6) derart gelagert ist, dass es zumindest abschnittsweise mittels des daran ausgebildeten Transportbands (7) als Gegendrucklager (L) sämtliche vom Siegelwerkzeug (12) ausgeübten Siegelandrückkräfte (F) aufnimmt.

2. Verpackungsmaschine nach Anspruch 1, **dadurch gekennzeichnet, dass** das Bandfördermodul (6) bei geöffneter Siegelstation (3) aus einer Transportposition (P1) heraus, in welcher dem daran vorgesehenen Transportband (7) von außerhalb der Siegelstation (3) die jeweiligen mit Produkten (P) beladenen Produktträger (T) zuführbar sind, zum Bilden der Siegelkammer (K) in Richtung des darüber angeordneten Außenrahmens (14) anhebbar ist.

3. Verpackungsmaschine nach Anspruch 1 oder 2, **dadurch gekennzeichnet, dass** das Werkzeugunterteil (5) ein Hubwerk (11) aufweist, mittels dessen das Bandfördermodul (6) anhebbar ist.

4. Verpackungsmaschine nach einem der vorangehenden Ansprüche, **dadurch gekennzeichnet, dass** das Siegelwerkzeug (12) und das Bandfördermodul (6) zusammen zum Durchführen eines Schneidvorgangs (C) in eine Schneidposition (P5) absenkbar sind.

5. Verpackungsmaschine nach einem der vorangehenden Ansprüche, **dadurch gekennzeichnet, dass** das Werkzeugoberteil (4) einen Klemmrahmen (13) zum Fixieren der Oberfolie (O) aufweist, der in der Schließstellung (S) der Siegelstation (3) zwischen dem Außenrahmen (14) und dem Bandfördermodul (6) zur Ausbildung der Siegelkammer (K) angeordnet ist.

6. Verpackungsmaschine nach Anspruch 5, **dadurch gekennzeichnet, dass** in der Schließstellung (S) zumindest abschnittsweise über den Außenrahmen (14) und den Klemmrahmen (13) mindestens ein Be- und/oder Entlüftungskanal (19) ausgebildet ist, durch den eine gewünschte Verpackungsatmosphäre hergestellt werden kann.

7. Verpackungsmaschine nach Anspruch 5 oder 6, **dadurch gekennzeichnet, dass** am Bandfördermodul (6) zumindest eine Abstützeinheit (26) für den Klemmrahmen (13) vorgesehen ist, auf welcher der Klemmrahmen (13) zumindest temporär in einer vorbestimmten Position (P6) während eines Arbeitstakts der Verpackungsmaschine (1) aufsitzt.

8. Verpackungsmaschine nach einem der vorangehenden Ansprüche, **dadurch gekennzeichnet, dass** die Verpackungsmaschine (1) eine Oberfolientransporteinheit (8a, 8b) aufweist und/oder mindestens ein separat ansteuerbares Zuführband (9) aufweist, das in Transportrichtung (R) dem Bandfördermodul (6) der Siegelstation (3) vorangestellt positioniert ist.

9. Verpackungsmaschine nach einem der vorangehenden Ansprüche, **dadurch gekennzeichnet, dass** das Transportband (7) mindestens eine Führung (27) für die Produktträger (T) aufweist und/oder ein zum Siegelwerkzeug (3) hingewandter Transportbandabschnitt des Transportbands (7) zumindest teilweise auf einer für den Siegelvorgang (G) als Gegenlager ausgebildeten Gleitplatte (28) des Bandförderers (6) angeordnet ist.

10. Verpackungsmaschine nach einem der vorangehenden Ansprüche, **dadurch gekennzeichnet, dass** das Siegelwerkzeug (12) und das Bandfördermodul (6) dazu ausgebildet sind, gemäß einem Maschinentakt mehrspurig und/oder mehrreihig Verpackungen (V) zu versiegeln.

11. Verfahren zum Betrieb einer Verpackungsmaschine (1) zur Herstellung einzelner Verpackungen (V) mit jeweils einem insbesondere flach ausgebildeten Produktträger (T) sowie einer Oberfolie (O), die ein auf dem Produktträger (T) positioniertes Produkt (P) gasdicht einschließt, wobei eine Siegelstation (3) zunächst in eine Schließstellung (S) für einen Siegelvorgang (G) verstellt wird, in welcher ein Werkzeugunterteil (5) und ein Werkzeugoberteil (4) der Siegelstation (3) derart aufeinander zu bewegt sind, dass ein Außenrahmen (13) des Werkzeugoberteils (4) und ein Bandfördermodul (6) des Werkzeugunterteils (5) eine Siegelkammer (K) ausbilden, **wobei** in der Schließstellung (S) der Siegelstation (3) mindestens ein in der Siegelkammer (K) beweglich am Werkzeugoberteil (4) gelagertes Siegelwerkzeug (12) für den Siegelvorgang (G) aus einer Ruheposition (P3), in welcher es vom Transportband (7) beabstandet gelagert ist, in eine an das Transportband (7) näher hin gerückte Siegelposition (P4) abgesenkt wird, **dadurch gekennzeichnet, dass** in der Siegelposition (P4) das Bandfördermodul (6) derart gelagert ist, dass es zumindest abschnittsweise mittels des daran ausgebildeten Transportbands (7) als Gegendrucklager (L) sämtliche vom Siegelwerkzeug (12) ausgeübten Siegelandrückkräfte (F) aufnimmt.

12. Verfahren nach Anspruch 11, **dadurch gekennzeichnet, dass** das Bandfördermodul (6) bei geöffneter Siegelstation (3) in einer Transportposition (P1) bereitgestellt wird, in welcher dem daran vorgesehenen Transportband (7) von außerhalb der Siegelstation (3) die jeweiligen mit Produkten (P) beladenen Produktträger (T) zugeführt werden, und dass zum Bilden der Siegelkammer (K) das Bandfördermodul (6) in Richtung des darüber angeordneten Außenrahmens (14) verlagert wird.

13. Verfahren nach Anspruch 11 oder 12, **dadurch gekennzeichnet, dass** das Siegelwerkzeug (12) und das Bandfördermodul (6) zusammen nach dem Siegelvorgang (G) zum Durchführen eines Schneidvorgangs (C) in eine Schneidposition (P5) abgesenkt werden.

14. Verfahren nach einem der Ansprüche 11 bis 13, **dadurch gekennzeichnet, dass** in der Schließstellung (S) der Siegelstation (3) zumindest abschnittsweise über den Außenrahmen (14) und einen daran heranführbaren, zum Einklemmen der Oberfolie (O) ausgebildeten Klemmrahmen (13) mindestens ein Be- und/oder Entlüftungskanal (19) ausgebildet wird, durch den eine gewünschte Verpackungsatmosphäre in den hergestellten Verpackungen (V) hergestellt werden kann.

15. Verfahren nach einem der Ansprüche 11 bis 14, **dadurch gekennzeichnet, dass** beim Siegelvorgang (G) mehrspurig in Arbeitsrichtung und/oder mehrreihig quer zur Arbeitsrichtung Verpackungen (V) vom Siegelwerkzeug (12) auf dem Bandfördermodul (6) versiegelt werden.

## Claims

1. Packaging machine (1) for the production of individual packagings (V), each with an, in particular, planar product carrier (T) as well as a top film (O) which encloses in a gas-tight manner a product (P) positioned on said product carrier (T), comprising a sealing station (3) with a tool upper part (4) which comprises an outer frame (14) as well as at least one sealing tool (12) mounted movable therein for a sealing operation (G), and with a tool lower part (5) that comprises a belt conveying module (6) with at least one conveyor belt (7) mounted thereon, where in a closed position (S) of said sealing station (3) said tool upper part (4) and said tool lower part (5) are moved toward each other in such a way that said outer frame (14) together with said belt conveying module (6) form a sealing chamber (K), wherein in the closed position (S) of said sealing station (3), said sealing tool (12) mounted in said sealing chamber (K) can be lowered for the sealing operation (G) from a resting position (P3), in which it is mounted spaced from said conveyor belt (7), to a sealing position (P4) that is moved closer to said conveyor belt (7), **characterized in that** in the sealing position (P4) the belt conveying module (6) is mounted in such a way that the thereat provided conveyor belt (7) absorbs at least in sections as a counter-pressure support (L) all sealing press forces (F) exerted by said sealing tool (12).

2. Packaging machine according to claim 1, **characterized in that** said belt conveying module (6) with said sealing station open (3) can preferably be raised from a transport position (P1), in which said respective product carriers (T) loaded with products (P) can be fed from outside said sealing station (3) to said conveyor belt (7) provided thereon, in the direction of said outer frame (14) arranged thereabove in order to form said sealing chamber (K).

3. Packaging machine according to claim 1 or 2, **characterized in that** said tool lower part (5) comprises a lifting mechanism (11) with which said belt conveying module (6) can be raised.

4. Packaging machine according to one of the preceding claims, **characterized in that** said sealing tool (12) and said belt conveying module (6) can be lowered together to a cutting position (P5) for performing a cutting operation (C).

5. Packaging machine according to one of the preceding claims, **characterized in that** said tool upper part (4) for securing said top film (O) comprises a clamping frame (13) which in said closed position (S) of said sealing station (3) is disposed between said outer frame (14) and said belt conveying module (6) for the formation of said sealing chamber (K).

6. Packaging machine according to claim 5, **characterized in that** at least one ventilation and/or venting duct (19), with which a desired packaging atmosphere can be created, is formed in said closed position (S) by way of said outer frame (14) and said clamping frame (13) at least in sections.

7. Packaging machine according to claim 5 or 6, **characterized in that**, at least one support unit (26), on which said clamping frame rests (13) at least temporarily in a predetermined position (P6) during a working cycle of said packaging machine (1), is provided on said belt conveying module (6) for said clamping frame (13).

8. Packaging machine according to one of the preceding claims, **characterized in that** said packaging machine (1) comprises a top film transport unit (8a, 8b) and/or at least one separately actuatable feeding belt (9) which is positioned in the direction of transport (R) upstream of said belt conveying module (6) of said sealing station (3).

9. Packaging machine according to one of the preceding claims, **characterized in that** said conveyor belt (7) comprises at least one guide (27) for said product carriers (T) and/or a conveyor belt section of said conveyor belt (7) facing said sealing tool (3) is arranged at least in part on a sliding plate (28) of said belt conveyor (6) formed as an abutment for the sealing operation (G).

10. Packaging machine according to one of the preceding claims, **characterized in that** said sealing tool (12) and said belt conveying module (6) are formed to seal packagings (V) according to a machine cycle in multiple lanes and/or in multiple rows.

11. Method for operating a packaging machine (1) for the production of individual packagings (V), each with an, in particular, planar product carrier (T) as well as a top film (O) which encloses in a gas-tight manner a product (P) positioned on said product carrier (T), where a sealing station (3) is first adjusted to a closed position (S) for a sealing operation (G) in which a tool lower part (5) and a tool upper part (4) of said sealing station (3) are moved toward each other in such a way that an outer frame (13) of said tool upper part (4) and a belt conveying module (6) of said tool lower part (5) form a sealing chamber (K), wherein in the closed position (S) of said sealing station (3), at least one sealing tool (12) mounted in said sealing chamber (K) movable on said tool upper part (4) is lowered for the sealing operation (G) from a resting position (P3), in which it is mounted spaced from said conveyor belt (7), to a sealing position (P4) that is moved closer to said conveyor belt (7), **characterized in that** in said sealing position (P4) the belt conveying module (6) is mounted in such a way that the thereat provided conveyor belt (7) absorbs as a counter-pressure support (L) at least in sections all sealing press forces (F) exerted by said sealing tool (12).

12. Method according to claim 11, **characterized in that** said belt conveying module (6) is provided in a transport position (P1) when said sealing station is open (3), in which said respective product carriers (T) loaded with products (P) are fed from outside said sealing station (3) to said conveyor belt (7) provided thereon, and that said belt conveying module (6) is moved in the direction of said outer frame (14) arranged thereabove in order to form said sealing chamber (K).

13. Method according to claim 11 or 12, **characterized in that** said sealing tool (12) and said belt conveying module (6) are lowered together after said sealing operation (G) to a cutting position (P5) for performing a cutting operation (C).

14. Method according to one of the claims 11 to 13, **characterized in that** at least one ventilation and/or venting duct (19), with which a desired packaging atmosphere can be created in the manufactured packagings (V), is formed in the closed position (S) of said sealing station (3) at least in sections by way of said outer frame (14) and said clamping frame (13) movable theretowards and formed for clamping said top film (O).

15. Method according to one of the claims 11 to 14, **characterized in that** packagings (V) are sealed by said sealing tool (12) on said belt conveying module (6) during the sealing operation (G) in the working direction in multiple lanes and/or in multiple rows transverse to the working direction.

## Revendications

1. Machine d'emballage (1) pour la fabrication d'emballages individuels (V), comprenant respectivement un support de produit (T), réalisé en particulier plat, et un film supérieur (0) qui entoure un produit (P) positionné sur le support de produit (T) d'une manière étanche aux gaz, comprenant un poste de scellage (3) avec une partie supérieure d'outil (4) qui présente un cadre extérieur (14) et au moins un outil de scellage (12) qui est monté de manière mobile dans celui-ci pour une opération de scellage (G), et comprenant une partie inférieure d'outil (5) qui présente un module de transport à bande (6) avec au moins une bande transporteuse (7) montée sur celui-ci, dans laquelle, dans une position fermée (S) du poste de scellage (3), la partie supérieure d'outil (4) et la partie inférieure d'outil (5) sont déplacées l'une vers l'autre de telle sorte que le cadre extérieur (14) forme une chambre de scellage (K) avec le module de transport à bande (6), dans laquelle, dans la position fermée (S) du poste de scellage (3), l'outil de scellage (12) monté dans la chambre de scellage (K) peut être abaissé pour le processus de scellage (G) d'une position de repos (P3) dans laquelle il est monté à distance de la bande transporteuse (7) vers une position de scellage (P4) qui est déplacée plus près de la bande transporteuse (7), **caractérisée en ce que** dans la position de scellage (P4), le module de transport à bande (6) est monté de telle sorte qui accueille au moins partiellement, au moyen de la bande transporteuse (7) réalisée sur celui-ci en tant que palier de pression de butée (L), toutes les forces de pression de scellage (F) exercées par l'outil de scellage (12).

2. Machine d'emballage selon la revendication 1, **caractérisée en ce que** le module de transport de bande (6)peut être soulevé, lorsque le poste de scellage (3) est ouvert à partir d'une position de transport (P1), dans laquelle les supports de produit (T) respectivement chargés de produits (P) peuvent être amenés de l'extérieur du poste de scellage (3) vers la bande de transport (7) prévue sur celui-ci pour former la chambre de scellage (K) en direction du cadre extérieur (14) agencé au-dessus.

3. Machine d'emballage selon la revendication 1 ou 2, **caractérisée en ce que** la partie inférieure d'outil (5) présente un mécanisme de levage (11) au moyen duquel le module de transport à bande (6) peut être levé.

4. Machine d'emballage selon l'une quelconque des revendications précédentes, **caractérisée en ce que** l'outil de scellage (12) et le module de transport à bande (6) peuvent être abaissés ensemble dans une position de découpe (P5) pour effectuer un processus de coupe (C).

5. Machine d'emballage selon l'une quelconque des revendications précédentes, **caractérisée en ce que** la partie supérieure d'outil (4) présente un cadre de serrage (13) pour une fixation du film supérieur (0) qui, dans la position fermée (S) du poste de scellage (3), est agencé entre le cadre extérieur (14) et le module de transport à bande (6) pour la formation de la chambre de scellage (K).

6. Machine d'emballage selon la revendication 5, **caractérisée en ce que**, dans la position fermée (S), au moins un canal de ventilation et/ou d'aération (19) est formé au moins par endroits par l'intermédiaire du cadre extérieur (14) et du cadre de serrage (13), au moyen duquel une atmosphère d'emballage souhaitée peut être produite.

7. Machine d'emballage selon la revendication 5 ou 6, **caractérisée en ce qu'**est prévue sur le module de transport à bande (6) au moins une unité de support (26) pour le cadre de serrage (13), sur laquelle le cadre de serrage (13) repose au moins temporairement dans une position prédéterminée (P6) pendant un cycle de travail de la machine d'emballage (1).

8. Machine d'emballage selon l'une quelconque des revendications précédentes, **caractérisée en ce que** la machine d'emballage (1) présente une unité de transport de film supérieur (8a, 8b) et/ou au moins une bande d'alimentation (9) pouvant être commandée séparément, qui est positionnée en amont du module de transport à bande (6) du poste de scellage (3) dans une direction de transport (R).

9. Machine d'emballage selon l'une quelconque des revendications précédentes, **caractérisée en ce que** la bande transporteuse (7) présente au moins un guide (27) pour les supports de produit (T) et/ou une section de bande transporteuse de la bande transporteuse (7) tournée vers l'outil de scellage (3) est agencée au moins partiellement sur une plaque de glissement (28) du module de transport à bande (6), qui est réalisée en tant que palier de butée pour le processus de scellage (G).

10. Machine d'emballage selon l'une quelconque des revendications précédentes, **caractérisée en ce que** l'outil de scellage (12) et le module de transport à bande (6) sont conçus selon un cycle de machine pour sceller des emballages (V) sur plusieurs lignes et/ou sur plusieurs rangées.

11. Procédé pour faire fonctionner une machine d'emballage (1) pour la fabrication d'emballages individuels (V), comprenant respectivement un support de produit (T), réalisé en particulier plat, et un film supérieur (0) qui entoure un produit (P) positionné sur le support de produit (T) d'une manière étanche aux gaz, dans lequel un poste de scellage (3) est d'abord réglé dans une position fermée (S) pour un processus de scellage (G), dans lequel une partie inférieure d'outil (5) et une partie supérieure d'outil (4) du poste de scellage (3) sont déplacées l'une vers l'autre, un cadre extérieur (13) de la partie supérieure d'outil (4) et un module de transport à bande (6) de la partie inférieure d'outil (5) forment une chambre de scellage (K), dans laquelle, dans la position fermée (S) du poste de scellage (3), au moins un outil de scellage (12) monté au niveau de la partie supérieure d'outil (4) mobile dans la chambre de scellage (K) est abaissé pour le processus de scellage (G) d'une position de repos (P3) dans laquelle il est monté à distance de la bande transporteuse (7) vers une position de scellage (P4) qui est déplacée plus près de la bande transporteuse (7), **caractérisé en ce que** dans la position de scellage (P4), e module de transport à bande (6) est monté de sorte qu'il accueille au moins partiellement, au moyen de la bande transporteuse (7) réalisée sur celui-ci en tant que palier de pression de butée (L), toutes les forces de pression de scellage (F) exercées par l'outil de scellage (12).

12. Procédé selon la revendication 11, **caractérisé en ce que**, lorsque le poste de scellage (3) est ouvert, le module de transport à bande (6) est prévu dans une position de transport (P1) dans laquelle les supports de produit (T) respectivement chargés de produits (P) sont amenés de l'extérieur du poste de scellage (3) à la bande transporteuse (7) prévue sur celui-ci, et **en ce que** pour former la chambre de scellage (K), le module de transport à bande (6) est déplacé en direction du cadre extérieur (14) agencé au-dessus de celui-ci.

13. Procédé selon la revendication 11 ou 12, **caractérisé en ce que** l'outil de scellage (12) et le module de transport à bande (6) sont abaissés ensemble après le processus de scellage (G) pour effectuer un processus de découpe (C) dans une position de découpe (P5).

14. Procédé selon l'une quelconque des revendications 11 à 13, **caractérisé en ce que** dans la position fermée (S) du poste de scellage (3), au moins un canal de ventilation et/ou d'aération (19) est formé au moins par endroits par l'intermédiaire du cadre extérieur (14) et d'un cadre de serrage (13) formé pour pouvoir être amené afin de serrer le film supérieur (O), au moyen duquel une atmosphère d'emballage souhaitée peut être produite dans les emballages produits (V).

15. Procédé selon l'une quelconque des revendications 11 à 14, **caractérisé en ce que** lors du processus de scellage (G), des emballages (V) sont scellés par l'outil de scellage (12) sur le module de transport à bande (6) sur plusieurs lignes dans la direction de travail et/ou plusieurs rangées transversalement à la direction de travail.
